# EUROPEAN PATENT APPLICATION

(11) **EP 4 765 335 A1**
(43) Date of publication of application: **24.06.2026**
(21) Application number: 25833299.8
(22) Date of filing: 26.06.2025
(51) Int. Cl.: H01M 10/613, H01M 10/6554, H01M 10/625, H01M 10/6556, H01M 50/502, H01M 50/536

(54) **BATTERY DEVICE**

(30) Priority: 04.07.2024 KR 20240088180
(71) Applicant: LG Energy Solution, Ltd., Seoul 07335 (KR)
(72) Inventor: JANG, Jun Ho, Daejeon 34122 (KR); KIM, Ki Young, Daejeon 34122 (KR)
(74) Representative: Plasseraud IP
(86) International application number: PCT/KR2025/008988
(87) International publication number: WO 2026/010240

(57) **Abstract**

The technical idea of the present disclosure provides a battery device including: a cooling frame; and a cell assembly disposed on the cooling frame, wherein the cell assembly includes: a plurality of battery cells; a heat transfer structure including a first heat transfer plate connected to electrode leads of the plurality of battery cells and a second heat transfer plate connected to the cooling frame; and an outer cover connected to the first heat transfer plate, wherein at an interface between the first heat transfer plate and the outer cover, the outer cover is continuously contacted to an outer surface of the first heat transfer plate.

## Description

### [Technical Field]

The present disclosure relates to a battery device.

This application claims the benefit of priority from Korean Patent Application No. 10-2024-0088180, filed on July 4, 2024, the entire contents disclosed therein are incorporated by reference into this disclosure.

### [Background]

Unlike primary batteries, secondary batteries can be charged and discharged multiple times. Secondary batteries are widely used as energy sources for various mobile devices such as handsets, laptops, and wireless vacuum cleaners. Recently, due to improvements in energy density and economies of scale, the manufacturing cost per unit capacity of secondary batteries has dramatically decreased, and the cruising distance of BEVs (battery electric vehicles) has increased to a level equivalent to that of fuel vehicles, so the main use of secondary batteries is shifting from mobile devices to mobility.

As secondary batteries are used in mobility, the demand for safety of secondary batteries is increasing. In the case of an accident such as a fire occurs in a secondary battery used in mobility, it may endanger the life of the driver, so research on technology to improve the safety of secondary batteries is essential.

### [Summary]

### [Technical Problem]

The technical problem to be solved by the present disclosure is to provide a battery device.

### [Technical Solution]

To solve the above-described problem, the technical idea of the present disclosure includes a cooling frame; and a cell assembly disposed on the cooling frame, wherein the cell assembly comprises: a plurality of battery cells; a heat transfer structure including a first heat transfer plate connected to electrode leads of the plurality of battery cells and a second heat transfer plate connected to the cooling frame; and an outer cover connected to the first heat transfer plate, wherein at an interface between the first heat transfer plate and the outer cover, the outer cover is continuously contacted to an outer surface of the first heat transfer plate.

In exemplary embodiments, the outer surface of the first heat transfer plate is a plane, and a contact surface of the outer cover contacted to the outer surface of the first heat transfer plate is a plane.

In exemplary embodiments, the outer surface of the first heat transfer plate has a first edge and a second edge opposite to each other, and contact between the first heat transfer plate and the outer cover is continuous between the first edge and the second edge of the outer surface of the first heat transfer plate.

In exemplary embodiments, the first heat transfer plate includes a plurality of through holes, and the outer cover includes a plurality of protrusions inserted into the plurality of through holes of the first heat transfer plate.

In exemplary embodiments, side surfaces of the plurality of protrusions of the outer cover are coplanar with an inner surface of the first heat transfer plate opposite to the outer surface of the first heat transfer plate.

In exemplary embodiments, the battery device further comprises an inner cover supporting the electrode leads of the plurality of battery cells, wherein the first heat transfer plate is disposed between the inner cover and the outer cover, and the outer cover is coupled to the inner cover.

In exemplary embodiments, the battery device further comprises a busbar mounted on the inner cover and coupled to the electrode leads of the plurality of battery cells.

In exemplary embodiments, the heat transfer structure includes metal, and the outer cover includes plastic.

In exemplary embodiments, the battery device further comprises a thermally conductive adhesive layer attaching the electrode leads of the plurality of battery cells to the first heat transfer plate.

In exemplary embodiments, the battery device further comprises a thermally conductive adhesive layer attaching the plurality of battery cells to the cooling frame.

In exemplary embodiments, the cooling frame includes a cooling channel through which cooling fluid flows.

In exemplary embodiments, the heat transfer structure and the outer cover are integrally formed by an insert molding method.

In exemplary embodiments, the battery device further comprises: a side frame coupled to a perimeter of the cooling frame and surrounding the cell assembly; and a top frame coupled to the side frame to cover the cell assembly.

### [Advantageous Effects]

According to exemplary embodiments, since the heat transfer structure and the outer cover are integrally formed through insert molding, the outer cover can have a level of rigidity similar to that of the heat transfer structure. Accordingly, physical deformation of the outer cover such as warping can be suppressed.

According to exemplary embodiments, since the rigidity of the outer cover can be reinforced by the heat transfer structure, a separate rib structure for reinforcing the rigidity of the outer cover can be eliminated, and as the separate rib structure is eliminated, space utilization of the cell assembly and the battery device can be improved.

According to exemplary embodiments, since the heat transfer structure and the outer cover are integrally formed through insert molding, the outer cover can be coupled to the heat transfer structure without an adhesive medium such as an adhesive. Accordingly, manufacturing difficulty of the outer cover can be reduced, and a coupling defect issue between the outer cover and the heat transfer structure can be prevented.

According to exemplary embodiments, since the electrode leads of the battery cells can be thermally coupled to the cooling frame through the heat transfer structure, heat generation of the electrode leads of the battery cells can be effectively controlled, and cooling efficiency for the battery cells can be improved.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a plan view illustrating a battery device according to exemplary embodiments of the present disclosure.
FIG. 2 is a cross-sectional view illustrating a portion of a battery device according to exemplary embodiments of the present disclosure.
FIG. 3 is a perspective view illustrating a heat transfer structure and an outer cover provided in a cell assembly according to exemplary embodiments of the present disclosure.
FIG. 4 is an exploded perspective view illustrating a heat transfer structure and an outer cover provided in a cell assembly according to exemplary embodiments of the present disclosure.
FIG. 5 is a cross-sectional view taken along line V-V' of FIG. 3.
FIG. 6 is a schematic view illustrating a portion of an electric vehicle equipped with a battery pack according to exemplary embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of filing the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

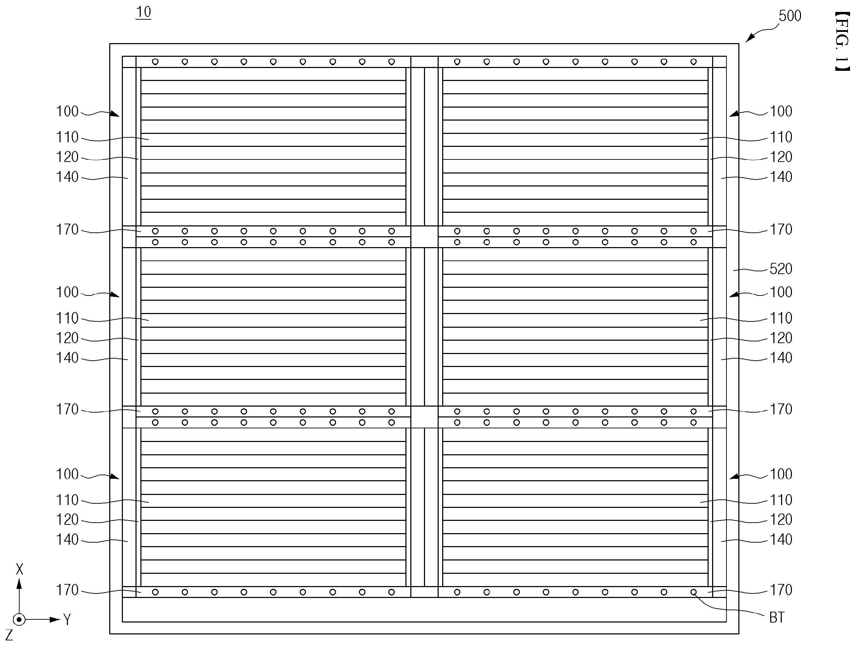

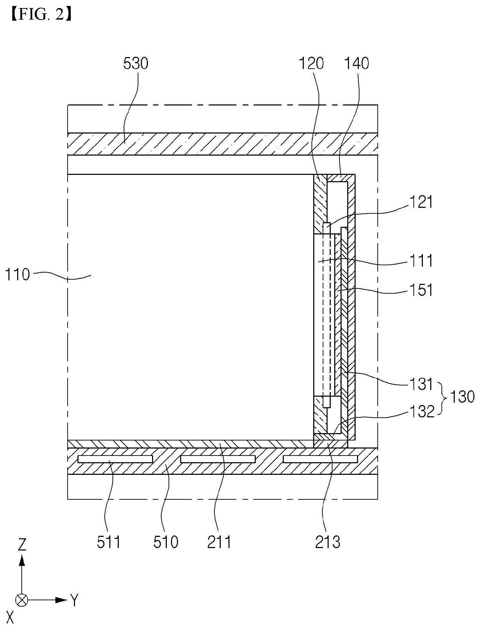

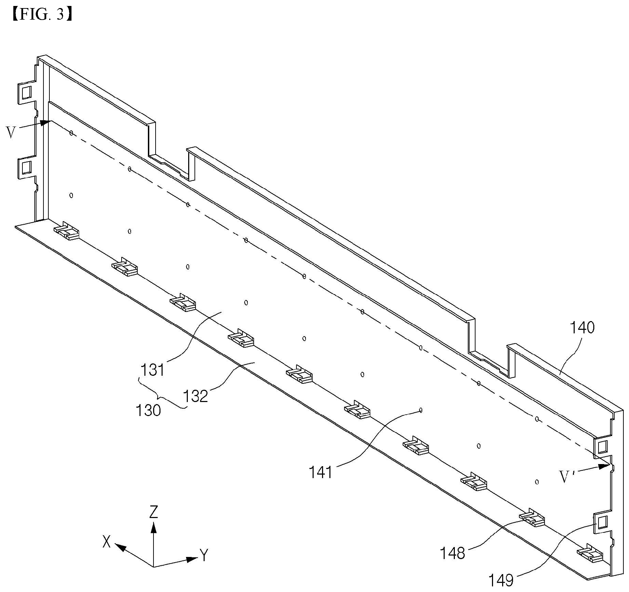

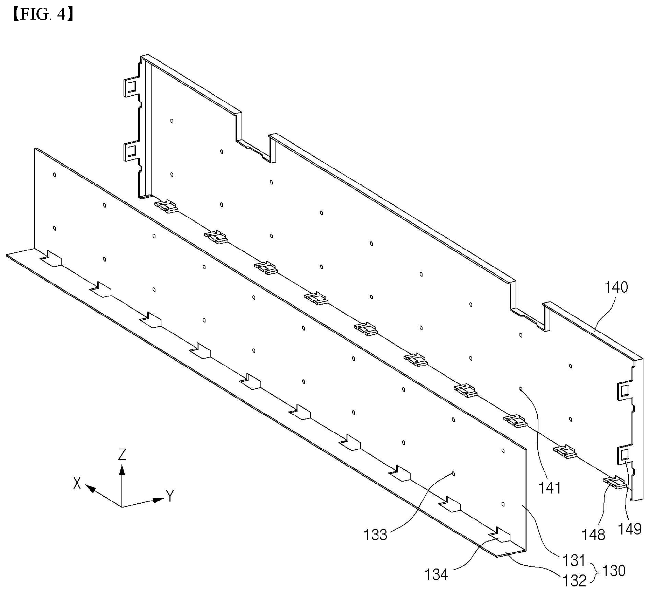

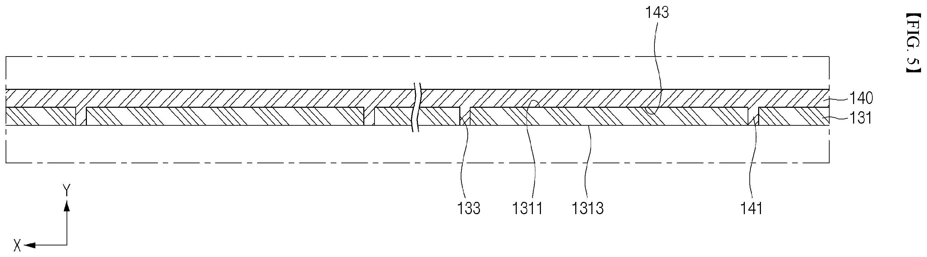

FIG. 1 is a plan view illustrating a battery device 10 according to exemplary embodiments of the present disclosure. FIG. 2 is a cross-sectional view illustrating a portion of a battery device 10 according to exemplary embodiments of the present disclosure. FIG. 3 is a perspective view illustrating a heat transfer structure 130 and an outer cover 140 provided in a cell assembly 100 according to exemplary embodiments of the present disclosure. FIG. 4 is an exploded perspective view illustrating a heat transfer structure 130 and an outer cover 140 provided in a cell assembly 100 according to exemplary embodiments of the present disclosure. FIG. 5 is a cross-sectional view taken along line V-V' of FIG. 3.

Referring to FIGS. 1 to 5, the battery device 10 may include a housing 500 and a cell assembly 100.

The housing 500 may provide an interior space accommodating the cell assembly 100. One or more cell assemblies 100 may be accommodated in the interior space of the housing 500. The housing 500 may include a base frame 510, a side frame 520, and a top frame 530.

The base frame 510 may support the cell assembly 100. The base frame 510 may have a flat plate form extending generally in a first horizontal direction (for example, X direction) and a second horizontal direction (for example, Y direction). A plurality of cell assemblies 100 arranged in the first horizontal direction (for example, X direction) and the second horizontal direction (for example, Y direction) may be provided on the base frame 510.

The base frame 510 may include a cooling channel 511 configured to allow cooling fluid to flow. Cooling fluid provided from the exterior of the base frame 510 may be supplied to an inlet of the cooling channel 511, flow along the cooling channel 511, and be discharged to the exterior through an outlet of the cooling channel 511. While the cooling fluid flows along the cooling channel 511, cooling of the cell assembly 100 may be performed. The cooling channel may extend in the first horizontal direction (for example, X direction) within the base frame. The cooling fluid may include a coolant and/or a refrigerant. The base frame 510 may be referred to as a cooling frame.

The side frame 520 may be coupled to a perimeter of the base frame 510. The side frame 520 may extend along the perimeter of the base frame 510, and may surround the cell assembly 100.

The top frame 530 may be fastened on the side frame 520 to cover the plurality of cell assemblies 100. The top frame 530 may have a flat plate form extending in a first horizontal direction (for example, X direction) and a second horizontal direction (for example, Y direction). The top frame 530 may be spaced apart from the cell assembly 100 in a vertical direction (for example, Z direction).

The cell assembly 100 may be mounted on the base frame 510. The cell assembly 100 may include a plurality of battery cells 110, an inner cover 120, a heat transfer structure 130, and an outer cover 140. In exemplary embodiments, the cell assembly 100 may correspond to a cell-to-pack structure or a battery module.

Each individual battery cell 110 is a lithium-ion battery, which is a basic unit of a secondary battery. Each individual battery cell 110 may include an electrode assembly, an electrolyte, and a cell case. The electrode assembly built into the cell case may include a positive electrode, a negative electrode, and a separator interposed between the positive electrode and the negative electrode. The electrode assembly may be any one of a jelly-roll type and a stack-type depending on an assembly form. The jelly-roll type electrode assembly may include a winding structure of a positive electrode, a negative electrode, and a separator interposed therebetween. The stack-type electrode assembly may include a plurality of positive electrodes, a plurality of negative electrodes, and a plurality of separators interposed therebetween that are sequentially stacked. The positive electrode may include a positive electrode current collector and a positive electrode active material. The negative electrode may include a negative electrode current collector and a negative electrode active material.

Each individual battery cell 110 may correspond to a pouch-type battery cell, a cylindrical battery cell, or a prismatic battery cell. The electrode assembly of the pouch-type battery cell is built into a pouch case including an aluminum laminate sheet. The electrode assembly of the cylindrical battery cell is built into a cylindrical metal can. The electrode assembly of the prismatic battery cell is built into a prismatic metal can.

The plurality of battery cells 110 provided in the cell assembly 100 may be connected in series and/or in parallel. As an example, the plurality of battery cells 110 may be connected in series with each other. As an example, the plurality of battery cells 110 may be connected in parallel with each other. As an example, when defining a set of two or more battery cells 110 connected in parallel with each other as a bank, one bank composed of two or more battery cells 110 connected in parallel with each other and another bank composed of two or more battery cells 110 connected in parallel with each other may be connected in series.

In exemplary embodiments, the plurality of battery cells 110 provided in the cell assembly 100 may be arranged in a first horizontal direction (for example, X direction), and each individual battery cell 110 may extend in a second horizontal direction (for example, Y direction). An electrode lead 111 may be provided at at least one of both ends of each individual battery cell 110 in the second horizontal direction (for example, Y direction). Electrode leads 111 of battery cells 110 neighboring in the first horizontal direction (for example, X direction) among the plurality of battery cells 110 may be electrically and physically connected to each other.

A thermally conductive adhesive layer 211 may be disposed between the cell assembly 100 and the base frame 510. The thermally conductive adhesive layer 211 may attach the plurality of battery cells 110 to the base frame 510. An upper portion of the thermally conductive adhesive layer 211 may directly contact each of the plurality of battery cells 110, and a lower portion of the thermally conductive adhesive layer 211 may directly contact the base frame 510. The thermally conductive adhesive layer 211 may thermally couple each of the plurality of battery cells 110 to the base frame 510. The thermally conductive adhesive layer 211 may include a thermal resin and/or a thermal interface material.

The inner cover 120 may be disposed at a side portion of the cell assembly 100 in the second horizontal direction (for example, Y direction). The inner cover 120 may be connected to a side portion of each of the battery cells 110 in the second horizontal direction (for example, Y direction). The inner cover 120 may include an insulating material. The inner cover 120 may support the electrode leads 111 of the plurality of battery cells 110 and a plurality of busbars 121. The inner cover 120 may include slits into which the electrode leads 111 of the plurality of battery cells 110 are inserted. The plurality of busbars 121 may be mounted on the inner cover 120, and each of the plurality of bus bars 121 may be electrically and physically connected to at least one of the electrode leads 111 of the plurality of battery cells 110. For example, each of the plurality of busbars 121 may be coupled to at least one of the electrode leads 111 of the plurality of battery cells 110 by welding. The plurality of busbars 121 may include an inter-busbar for electrically connecting battery cells 110 belonging to the same cell assembly 100 and a terminal busbar for electrically connecting battery cells 110 belonging to different cell assemblies 100.

The heat transfer structure 130 may thermally couple at least one of the electrode leads 111 of the plurality of battery cells 110 to the base frame 510. The heat transfer structure 130 may provide a heat conduction path for transferring heat generated in the plurality of battery cells 110 to the base frame 510. The heat transfer structure 130 may include a material having excellent thermal conductivity, for example, metal. For example, the heat transfer structure 130 may include copper, aluminum, silver, gold, platinum, tungsten, iron, or a combination thereof.

The heat transfer structure 130 may include a first heat transfer plate 131 connected to at least one of the electrode leads 111 of the plurality of battery cells 110, and a second heat transfer plate 132 connected to the base frame 510.

The first heat transfer plate 131 is between the inner cover 120 and the outer cover 140, and the first heat transfer plate 131 may have a flat plate form extending generally in a first horizontal direction (for example, X direction) and a vertical direction (for example, Z direction). The first heat transfer plate 131 may include an inner surface 1313 and an outer surface 1311 opposite to each other in the second horizontal direction (for example, Y direction), and the inner surface 1313 and the outer surface 1311 of the first heat transfer plate 131 may each be a plane.

The first heat transfer plate 131 may be thermally and physically attached to the electrode leads 111 of the plurality of battery cells 110 and the plurality of busbars 121 by a thermally conductive adhesive layer 151. The thermally conductive adhesive layer 151 may be interposed between each of the electrode leads 111 of the plurality of battery cells 110 and the inner surface 1313 of the first heat transfer plate 131. The thermally conductive adhesive layer 151 may be thermally conductive and electrically non-conductive. For example, the thermally conductive adhesive layer 151 may include a thermal resin and/or a thermal interface material.

The second heat transfer plate 132 may be connected to a lower end of the first heat transfer plate 131, and the second heat transfer plate 132 may extend along an upper surface of the base frame 510. The second heat transfer plate 132 may have a flat plate form extending generally in a first horizontal direction (for example, X direction) and a second horizontal direction (for example, Y direction). The second heat transfer plate 132 may include an upper surface and a bottom surface opposite to each other in a vertical direction (for example, Z direction), and the upper surface and the bottom surface of the second heat transfer plate 132 may each be a plane. When viewed in cross-section, the extension direction of the second heat transfer plate 132 and the extension direction of the first heat transfer plate 131 of the heat transfer structure 130 intersect or are perpendicular to each other, and the heat transfer structure 130 may have a bent form.

The second heat transfer plate 132 may be thermally and physically attached to the base frame 510 by a thermally conductive adhesive layer 213. The thermally conductive adhesive layer 213 may be interposed between the bottom surface of the second heat transfer plate 132 and the base frame 510. The thermally conductive adhesive layer 213 may be thermally conductive and electrically non-conductive. For example, the thermally conductive adhesive layer 213 may include a thermal resin and/or a thermal interface material.

When the electrode leads 111 and/or busbars 121 of the battery cells 110 are heated to high temperature, if the temperature of the electrode leads 111 and/or busbars 121 of the battery cells 110 is not lowered, there is a problem that heat is transferred to the center of the battery cells 110 and heat generation of the battery cells 110 is intensified. According to exemplary embodiments of the present disclosure, since the electrode leads 111 and busbars 121 of the battery cells 110 are thermally coupled to the base frame 510 having a cooling function through the heat transfer structure 130, cooling efficiency for the battery cells 110 can be improved and heat generation of the battery cells 110 can be effectively controlled.

The outer cover 140 may be disposed at a side portion of the cell assembly 100 in the second horizontal direction (for example, Y direction). The outer cover 140 may cover a side portion of the inner cover 120 and a side portion of the heat transfer structure 130. The outer cover 140 may include an insulating material. The outer cover 140 may be connected to the heat transfer structure 130, and may be coupled to the inner cover 120. When the outer cover 140 is coupled to the inner cover 120, the first heat transfer plate 131 may be disposed between the outer cover 140 and the inner cover 120. The outer cover 140 may include an insulating material. For example, the outer cover 140 may be formed of plastic. The outer cover 140 may be coupled to the heat transfer structure 130 without an adhesive medium such as an adhesive.

In exemplary embodiments, the outer cover 140 and the heat transfer structure 130 may be integrally formed through insert molding. The insert molding may include: inserting the heat transfer structure 130 into an injection mold; injecting liquid plastic material into the injection mold; and curing the plastic material. In the process of curing the plastic material, the outer cover 140 formed by curing the plastic material may be coupled to be integral with the heat transfer structure 130. The coupling between the outer cover 140 and the heat transfer structure 130 may be achieved without an adhesive medium such as an adhesive and/or a fastening structure such as a fixing pin. The outer cover 140 and the heat transfer structure 130 are integrally formed through insert molding, and may be treated as a single component.

The outer cover 140 may be coupled to the first heat transfer plate 131. The outer cover 140 may be coupled to the outer surface 1311 of the first heat transfer plate 131 such that a gap is not formed between the outer cover 140 and the outer surface 1311 of the first heat transfer plate 131. At a contact interface between the outer cover 140 and the first heat transfer plate 131, the outer cover 140 may be continuously in contact with the outer surface 1311 of the first heat transfer plate 131. At the contact interface between the outer cover 140 and the first heat transfer plate 131, contact between the first heat transfer plate 131 and the outer cover 140 may be continuous between a first edge and a second edge of the first heat transfer plate 131 opposite to each other in the first horizontal direction (for example, X direction). In addition, at the contact interface between the outer cover 140 and the first heat transfer plate 131, contact between the first heat transfer plate 131 and the outer cover 140 may be continuous in the vertical direction (for example, Z direction). A contact surface 143 of the outer cover 140 contacted to the outer surface 1311 of the first heat transfer plate 131 may be a plane parallel to the outer surface 1311 of the first heat transfer plate 131.

The first heat transfer plate 131 may include a plurality of through holes 133. The plurality of through holes 133 of the first heat transfer plate 131 may be spaced apart from each other in the first horizontal direction (for example, X direction) and the vertical direction (for example, Z direction). The outer cover 140 may include a plurality of protrusions 141 inserted into the plurality of through holes 133 of the first heat transfer plate 131. Each of the plurality of through holes 133 of the first heat transfer plate 131 may extend from the outer surface 1311 to the inner surface 1313 of the first heat transfer plate 131. Each of the plurality of protrusions 141 of the outer cover 140 may be inserted into a corresponding through hole 133 among the plurality of through holes 133 of the first heat transfer plate 131. Each of the plurality of protrusions 141 of the outer cover 140 may extend from the outer surface 1311 of the outer cover 140 to the inner surface 1313 of the outer cover 140 through a corresponding through hole 133 among the plurality of through holes 133 of the first heat transfer plate 131. Side surfaces of the plurality of protrusions 141 of the outer cover 140 may be coplanar with the inner surface 1313 of the outer cover 140. For example, when forming the outer cover 140 and the heat transfer structure 130 through insert molding, the plastic material filling the plurality of through holes 133 of the first heat transfer plate 131 may become the plurality of protrusions 141 of the outer cover 140. As the plurality of protrusions 141 of the outer cover 140 are inserted into the plurality of through holes 133 of the first heat transfer plate 131, the coupling between the outer cover 140 and the heat transfer structure 130 may become more robust.

In exemplary embodiments, in the first heat transfer plate 131, a first region of the first heat transfer plate 131 contacted to the electrode leads 111 and busbars 121 of the battery cells 110 may be separated from a first region of the first heat transfer plate 131 provided with the plurality of through holes 133. The electrode leads 111 and busbars 121 of the battery cells 110 may contact a portion of the first heat transfer plate 131 involved in heat conduction, but may not contact the insulating outer cover 140 not involved in heat conduction.

The outer cover 140 may be fastened to the inner cover 120. By the outer cover 140 being coupled to the inner cover 120, the heat transfer structure 130 integral with the outer cover 140 may be fixed. The outer cover 140 may include a first fastening protrusion 148 coupled to the inner cover 120 at a lower end thereof, and may include second fastening protrusions 149 coupled to the inner cover 120 at both side portions thereof. The heat transfer structure 130 may include an opening 134 through which the first fastening protrusion 148 of the outer cover 140 passes, and the first fastening protrusion 148 of the outer cover 140 may be snap-fitted to a fastening part of the inner cover 120 provided at a lower portion of the inner cover 120. The second fastening protrusions 149 of the outer cover 140 may be snap-fitted to fastening parts of the inner cover 120 provided at side portions of the inner cover 120.

In some exemplary embodiments, the heat transfer structure 130 may have a fastening structure fastened to the inner cover 120. In this case, the fastening structure for directly fastening the outer cover 140 to the inner cover 120 (that is, the first fastening protrusion 148 and the second fastening protrusions 149) may be omitted, and the outer cover 140 may be fixed by the heat transfer structure 130 being fastened to the inner cover 120.

The cell assembly 100 may include a pair of fastening frames 170. The pair of fastening frames 170 may be spaced apart from each other in the first horizontal direction (for example, X direction) with the plurality of battery cells 110 therebetween. One of the pair of fastening frames 170 may be attached to an outermost battery cell 110 among the plurality of battery cells 110, and the other one of the pair of fastening frames 170 may be attached to another outermost battery cell 110 among the plurality of battery cells 110. Each of the pair of fastening frames 170 may be fastened to a support structure of the housing 500 provided on the base frame 510 by a fastening bolt BT. Each of the pair of fastening frames 170 is fastened to the housing 500, and may support the battery cells 110 in the first horizontal direction (for example, X direction). The pair of fastening frames 170 may support the battery cells 110 in the first horizontal direction (for example, X direction) to suppress swelling of the battery cells 110.

According to exemplary embodiments, since the heat transfer structure 130 and the outer cover 140 are integrally formed through insert molding, the outer cover 140 can have a level of rigidity similar to that of the heat transfer structure 130. Accordingly, physical deformation of the outer cover 140 such as warping can be suppressed.

In a battery device according to a comparative example, the outer cover has a rib structure for reinforcing rigidity at a portion abutting the heat transfer structure. According to exemplary embodiments, since the rigidity of the outer cover 140 can be reinforced by the heat transfer structure 130, a separate rib structure for reinforcing the rigidity of the outer cover 140 can be eliminated, and as the separate rib structure is eliminated, space utilization of the cell assembly 100 and the battery device 10 can be improved.

According to exemplary embodiments, since the heat transfer structure 130 and the outer cover 140 are integrally formed through insert molding, the outer cover 140 can be coupled to the heat transfer structure 130 without an adhesive medium such as an adhesive or a fastening structure such as a fixing pin. Accordingly, manufacturing difficulty of the outer cover 140 can be reduced, and a coupling defect issue between the outer cover 140 and the heat transfer structure 130 can be prevented.

According to exemplary embodiments, since the electrode leads 111 of the battery cells 110 can be thermally coupled to the cooling frame through the heat transfer structure 130, heat generation of the electrode leads 111 of the battery cells 110 can be effectively controlled, and cooling efficiency for the battery cells 110 can be improved.

### (second embodiment)

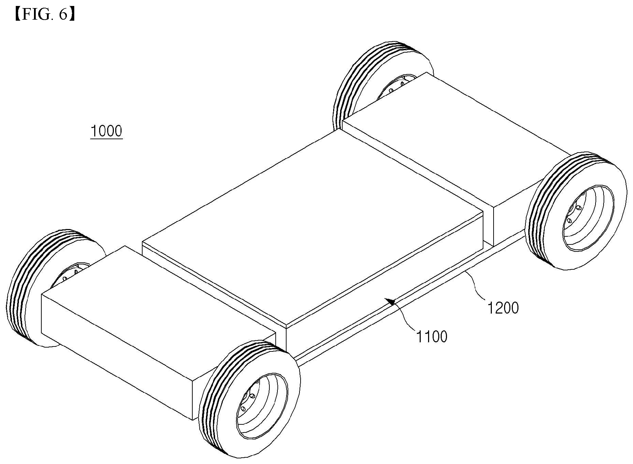

FIG. 6 is a schematic view illustrating a portion of an electric vehicle 1000 equipped with a battery pack 1100 according to exemplary embodiments of the present disclosure.

In FIG. 6, the electric vehicle 1000 may include a vehicle frame 1200 forming a lower framework of the vehicle, a battery pack 1100 mounted on the vehicle frame 1200, and traveling wheels. The battery pack 1100 may include the battery device 10 described with reference to FIGS. 1 to 5. According to exemplary embodiments, since heat generation of the electrode leads 111 of the battery cells 110 can be effectively controlled and cooling efficiency for the battery cells 110 can be improved, safety and reliability of the battery pack and the electric vehicle including the same can be improved.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A battery device, comprising:
a cooling frame; and
a cell assembly disposed on the cooling frame,
wherein the cell assembly comprises:
a plurality of battery cells;
a heat transfer structure comprising a first heat transfer plate connected to electrode leads of the plurality of battery cells and a second heat transfer plate connected to the cooling frame; and
an outer cover connected to the first heat transfer plate,
wherein at an interface between the first heat transfer plate and the outer cover, the outer cover is continuously contacted to an outer surface of the first heat transfer plate.

2. The battery device of claim 1, wherein
the outer surface of the first heat transfer plate is a plane, and
a contact surface of the outer cover contacted to the outer surface of the first heat transfer plate is a plane.

3. The battery device of claim 1, wherein
the outer surface of the first heat transfer plate has a first edge and a second edge opposite to each other, and
contact between the first heat transfer plate and the outer cover is continuous between the first edge and the second edge of the outer surface of the first heat transfer plate.

4. The battery device of claim 1, wherein
the first heat transfer plate comprises a plurality of through holes, and
the outer cover comprises a plurality of protrusions inserted into the plurality of through holes of the first heat transfer plate.

5. The battery device of claim 4, wherein side surfaces of the plurality of protrusions of the outer cover are coplanar with an inner surface of the first heat transfer plate opposite to the outer surface of the first heat transfer plate.

6. The battery device of claim 1, further comprising an inner cover supporting the electrode leads of the plurality of battery cells,
wherein the first heat transfer plate is disposed between the inner cover and the outer cover, and
the outer cover is coupled to the inner cover.

7. The battery device of claim 6, further comprising a busbar mounted on the inner cover and coupled to the electrode leads of the plurality of battery cells.

8. The battery device of claim 1, wherein
the heat transfer structure comprises metal, and
the outer cover comprises plastic.

9. The battery device of claim 1, further comprising a thermally conductive adhesive layer attaching the electrode leads of the plurality of battery cells to the first heat transfer plate.

10. The battery device of claim 1, further comprising a thermally conductive adhesive layer attaching the plurality of battery cells to the cooling frame.

11. The battery device of claim 1, wherein the cooling frame comprises a cooling channel through which cooling fluid flows.

12. The battery device of claim 1, wherein the heat transfer structure and the outer cover are integrally formed by an insert molding method.

13. The battery device of claim 1, further comprising:
a side frame coupled to a perimeter of the cooling frame and surrounding the cell assembly; and
a top frame coupled to the side frame to cover the cell assembly.
